# EUROPÄISCHE PATENTANMELDUNG

(11) **EP 0 847 878 A2**
(43) Veröffentlichungstag der Anmeldung: **17.06.1998**
(21) Anmeldenummer: 97121515.7
(22) Anmeldetag: 06.12.1997
(51) Int. Cl.: B60C 11/12

(54) **Fahrzeugreifen mit einer Lauffläche mit Einschnitten**

(30) Priorität: 12.12.1996 DE 19651792
(71) Anmelder: Continental Aktiengesellschaft, 30165 Hannover (DE)
(72) Erfinder: Rodewald, Helmut, 31249 Rötzum (DE)

(57) **Zusammenfassung**

Die Erfindung bezieht sich auf einen Fahrzeugreifen (1) mit einer Lauffläche (2) mit Einschnitten (3). Um die Griffigkeit der Lauffläche auf Schnee weiter zu verbessern, wird erfindungsgemäß vorgeschlagen, dass zumindest einige der Einschnitte (3) zumindest eine Erweiterung (4) aufweisen, wobei diese Erweiterung(en) (4) sich nach radial innen hin verjüngen.

## Beschreibung

Die Erfindung bezieht sich auf einen Fahrzeugreifen mit einer Lauffläche mit Einschnitten, von denen zumindest einige zumindest eine Erweiterung aufweisen.

Aus den EP-PA 0 710 577 A1 und 0 713 790 A2 ist es bekannt, im Verlaufe von Einschnitten eine Erweiterung anzuordnen. Aus JP-2-241 806 ist es bekannt, mehrere Erweiterungen im Verlaufe eines jeden Einschnittes anzuordnen und zwar an dessen Enden.

Der Erfinder hat sich die Aufgabe gestellt, die Traktion des Fahrzeugreifens auf lockerem Schnee zu verbessern ohne dabei die zur Verfügung stehende Positivfläche zu sehr zu verkleinern.

Tiefschnee ist immer lockerer Schnee, wobei lockerer Schnee nicht immer Tiefschnee sein muss.

Die Aufgabe wird erfindungsgemäß durch einen Fahrzeugreifen gemäß Anspruch 1 gelöst; dieser ist dadurch gekennzeichnet, dass die besagten Erweiterung(en) sich nach radial innen hin verjüngen. Diese Erweiterungen dienen dazu Schnee aufzunehmen und in die Einschnitte weiterzuleiten, sodass diese mit Schnee vollgestopft sind. Der eingepresste Schnee haftet während der Abrollbewegung des Fahrzeugreifens im Latsch an dem lockeren Schnee der Fahrbahn an, was eine traktionsfördernde Wirkung zur Folge hat.

Der Erfinder hat erkannt, dass Schnee, der in Einschnitte in geeigneter Dichte eingepresst wird entgegen dem bisherigen Vorurteil - wonach Negative möglichst frei gehalten werden sollten - unter bestimmten Umständen die Haftung fördern kann. Daraufhin hat er die Bedingungen näher untersucht, unter denen der eingedrungene Schnee - der bislang nur als störend empfunden wurde - nützlich ist. Dabei hat er festgestellt, dass es für einen positiven Effekt entscheidend ist, dass der in einem Einschnitt im Leertrum mitbeförderte und/oder im Latscheinlauf neu aufgenommene Schnee möglichst kurz hinter dem Latscheinlauf sich mit dem auf der Straße befindlichen Schnee festkörperähnlich vereinigt und dadurch einen an der Straße anhaftenden Steg ausbildet, demgegenüber sich der betreffende Gummisteg des Reifens formschlüssig abstützen kann. Unter dem "Leertrum" wird - zur Unterscheidung vom "Latsch" - der Laufflächenbereich vom Latschauslauf bis zum Latscheinlauf entsprechend der Rotationsrichtung verstanden.

Analog der Beobachtung, dass nur ein Schneeball mittlerer Packungsdichte nach Wurf auf ein hartes Hindernis zum Anhaften an demselben kommt, geht es der Erfindung darum, in den Einschnitten eine solche Packungsdichte von Schnee zu erzeugen, dass die Stirnfläche dieser Schneeladung eine analoge Verbindung zum Schnee auf der Straße eingeht.

Der Erfinder hat ferner erkannt, dass für einen solchen Effekt eine höhere Schneepackungsdichte erreicht werden muss als bislang erreicht; allerdings darf die Packungsdichte nicht so groß werden, dass der Schnee zu völlig kompaktem Eis wird. Die beste Haftung wird bei gut aneinander pappendem Schnee erzielt.

Vorzugsweise haben gemäß Anspruch 2 die Erweiterungen an der Laufflächenperipherie eine 2- bis 8-fach größere Breite als die Einschnittbreite außerhalb der Erweiterungen. Dies hält den Positivflächenverlust in erträglichen Grenzen und führt zu einer guten Stopfwirkung des lockeren Schnees der Fahrbahn in die Erweiterungen der Einschnitte und von dort weiter in die Einschnitte selbst.

Erfindungsgemäße Einschnitte in Fahrzeugreifen weisen vorzugsweise gemäß Anspruch 3 in an sich bekannter Weise eine Breite zwischen 0,4 mm und 1,2 mm auf, vorzugsweise zwischen 0,8 mm und 1,0 mm.

Die erfindungsgemäße Verjüngung der Erweiterungen nach radial innen hin erfolgt gemäß Anspruch 4 vorzugsweise linear. Dabei haben sie eine prismaförmige Gestalt. Dadurch ergibt sich für den eindringenden Schnee ein geringer Wanderwiderstand an den Wänden der Erweiterungen, was zu einer guten Stopfwirkung in den Erweiterungen und in den Einschnitten führt. Eine gute Stopfwirkung ist für eine gute Haftung des eingebundenem Schnees mit dem lockerem Schnee der Fahrbahn im Latsch erforderlich.

Die uns vorbekannten Einschnitte haben keine Aushebeschrägen. In Rillen - darunter werden in der Regel und in dieser Anmeldung Negative verstanden, deren Breite in halber Profiltiefe größer oder gleich 1,2 mm ist - sind Aushebeschrägen zur Erleichterung des Formöffnens und zur Verbesserung des Steinauswurfes bekannt. Diese Aushebeschrägen haben ihrer Funktion nach nichts mit den erfindungsgemäß abgeschrägten Erweiterungen zu tun. Zudem unterscheiden sie sich in ihrer Bemessung: Die schräge Begrenzungsfläche erfindungsgemäßer Erweiterungen sollte vorzugsweise um 20° bis 40° gegenüber der Radialen geneigt sein, besonders bevorzugt um 30° bis 35°.

Gemäß Anspruch 5 weisen die Erweiterungen auf der Höhe des Grundes des erweiterten Einschnittes ein Breite auf, welche höchstens das 1,5-fache der Einschnittbreite außerhalb der Erweiterungen beträgt. Das Optimum dieser Breite liegt bei der 1,0-fachen der Einschnittbreite. Aus fertigungstechnischen Gründen ist aber eine Toleranz der Einschnittbreite an der Stelle der Erweiterungen erforderlich; ein zur anderen Seite hin gerichtetes Toleranzintervall würde die Einwanderung des über die Erweiterung aufgenommenen Schnees in die Einschnitte zu sehr hemmen.

Erfindungsgemäße Erweiterungen sind vorzugsweise gemäß Anspruch 6 in Quereinschnitten angeordnet, also in Einschnitten, die in der Draufsicht um höchstens 45° gegenüber der Axialen geneigt sind. Die Anordnung von Erweiterungen in Quereinschnitten hat eine beträchtliche traktionsfördernde Wirkung. Diese kommt durch das Aneinanderhaften von, in Erweiterungen und Einschnitten, eingebundenem Schnee und lockerem Schnee der Fahrbahn im Latsch zustande.

Die Erweiterungen in drehsinngebundenen Fahrzeugreifen sollen gemäß Anspruch 7 den Quereinschnitten voreilen. Dann wird der Schnee besonders gut und bereits früh am Latscheinlauf aufgenommen und in alle Quereinschnitte im Latsch gestopft.

Gemäß Anspruch 8 können die Erweiterungen in Längs-Einschnitten angeordnet werden, also in Einschnitten, die in der Draufsicht um höchstens 45° gegenüber der Umfangsrichtung geneigt sind, wobei diese Längseinschnitte in an sich bekannter Weise bevorzugt in den jeweils äußeren Vierteln der Lauflächenbreite angeordnet sind. Dadurch wird die Kurvenfahrt auf lockerem Schnee in analoger Weise verbessert.

Dabei sollten sich gemäß Anspruch 9 die Erweiterungen von dem jeweils erweiterten Einschnitt aus gesehen nach axial außen hin erweitern, sodass bei Kurvenfahrt Schnee zuerst in die Erweiterungen eindringt. Dadurch wird auch bei Kurvenfahrt eine gute Stopfwirkung erzielt und damit das Kurvenfahrverhalten auf Schnee verbessert. Der Effekt gelingt besonders deutlich auf noch lockerem, aber pappbereitem, also relativ warmem Schnee.

Die erfindungsgemäßen Einschnitterweiterungen befinden sich - abweichend von bereits genannter JP 2-241 806 - nie am Ende eines Einschnittes sondern gemäß Anspruch 10 davon beabstandet, sodass sich zu beiden Seiten einer jeden Erweiterung - also bei einem Quereinschnitt nach links und rechts, bei einem Längseinschnitt nach vorne und hinten - zumindest ein schmaler Einschnitt-Abschnitt anschließt.

Die Erfindung wird nachfolgend anhand einiger Figuren näher erläutert. Es zeigt:
- Fig. 1: in perspektivischer Darstellung einen erfindungsgemäßen Fahrzeugreifen
- Fig. 2: in perspektivischer Darstellung einen Profilklotz mit Einschnitt und erfindungsgemäßer Erweiterung
- Fig. 3: einen Schnitt durch einen Profilklotz quer zum Einschnittverlauf
- Fig. 4: in Draufsicht einen Profilausschnitt aus einem drehsinngebundenen Fahrzeugreifen mit voreilenden Erweiterungen in den Quereinschnitten
- Fig. 5: in Draufsicht einen Profilausschnitt aus einem nicht drehsinngebundenen Fahrzeugreifen
- Fig. 6: in Draufsicht einen Profilausschnitt aus einem nicht drehsinngebundenen Fahrzeugreifen mit vor- und nacheilenden Erweiterungen in einzelnen Einschnitten
- Fig. 7: in Draufsicht einen Profilausschnitt aus einem drehsinn- und seiten-gebunden Fahrzeugreifen mit Erweiterungen in den Einschnitten
- Fig. 8: in Draufsicht einen Ausschnitt aus einem symmetrischen Reifenprofil mit zentrierten, beidseitigen Erweiterungen in den Längseinschnitten

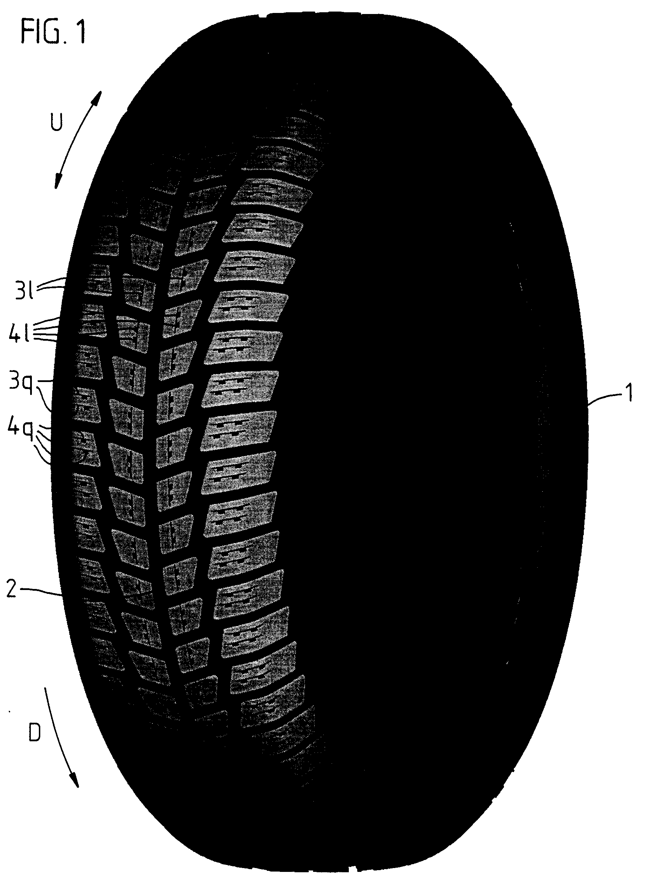

Fig. 1 zeigt einen an einen Drehsinn D gebundenen Fahrzeugreifen 1 mit einer Lauffläche 2 mit Einschnitten 3 in allen vier Profilklotzreihen. Als Mittenbereich werden die beiden mittleren Profilklotzreihen bezeichnet. Die äußeren Viertel der Laufflächenbreite also die jeweils äußeren Profilklotzreihen werden auch als Schulterbereiche bezeichnet. Quereinschnitte 3q befinden sich in den Schulterbereichen und in Umfangsrichtung U verlaufende Längseinschnitte 3l im Mittenbereich. Die Profilklötze im Mittenbereich haben je einen Längseinschnitt 3l. Letztere weisen je zwei nach axial außen hin orientierte Erweiterungen 4l auf. In den Schulterbereichen hat jeder einzelne Profilklotz zwei zueinander parallele Quereinschnitte 3q. Die Quereinschnitte 3q weisen jeweils zwei im Drehsinn D voreilende Erweiterungen 4q auf.

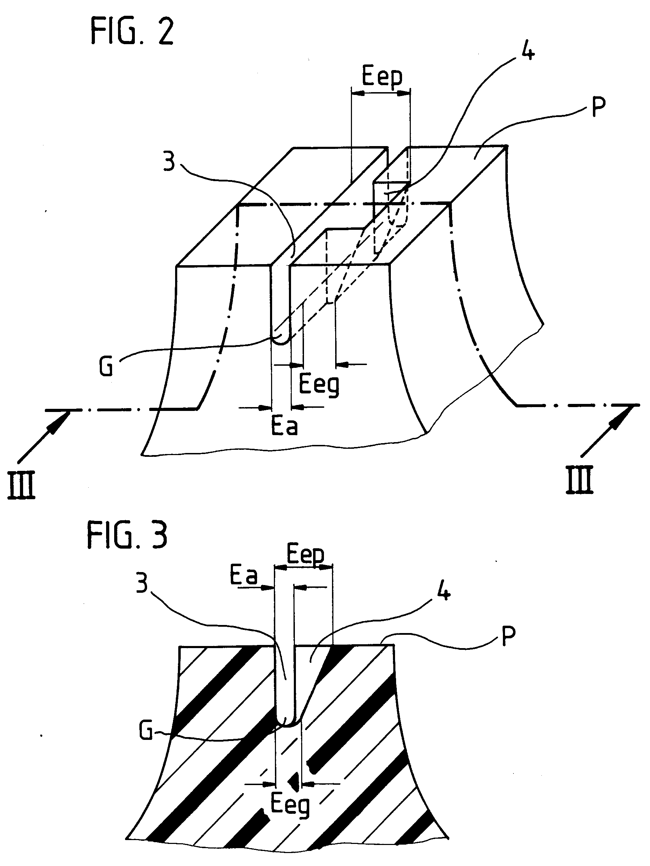

Fig. 2 zeigt einen Profilklotz mit einem Einschnitt 3 mit erfindungsgemäßer Erweiterung 4 in perspektivischer Ansicht. An der Laufflächenperipherie P hat die Erweiterung 4 eine Breite Eep quer zum Einschnittverlauf von der 2- bis 8-fachen der Einschnittbreite Ea außerhalb der Erweiterung 4. Die Breite Eeg der Erweiterung 4 auf der Höhe des Grundes G des erweiterten Einschnitts 3 beträgt höchstens das 1,5-fache der Einschnittbreite Ea außerhalb der Erweiterung 4. Der hier gezeigte Einschnitt 3 verläuft in axialer Richtung.

Fig. 3 zeigt einen Schnitt quer zum Einschnitt 3 entsprechend dem in Fig. 2 gezeigten Schnittverlauf III-III. An der Laufflächenperipherie P hat die Erweiterung 4 eine Breite Eep von der 2- bis 8-fachen der Einschnittbreite Ea außerhalb der Erweiterung 4. Die Breite Eeg der Erweiterung 4 auf der Höhe des Grundes G des erweiterten Einschnitts 3 beträgt höchstens das 1,5-fache der Einschnittbreite Ea außerhalb der Erweiterung 4.

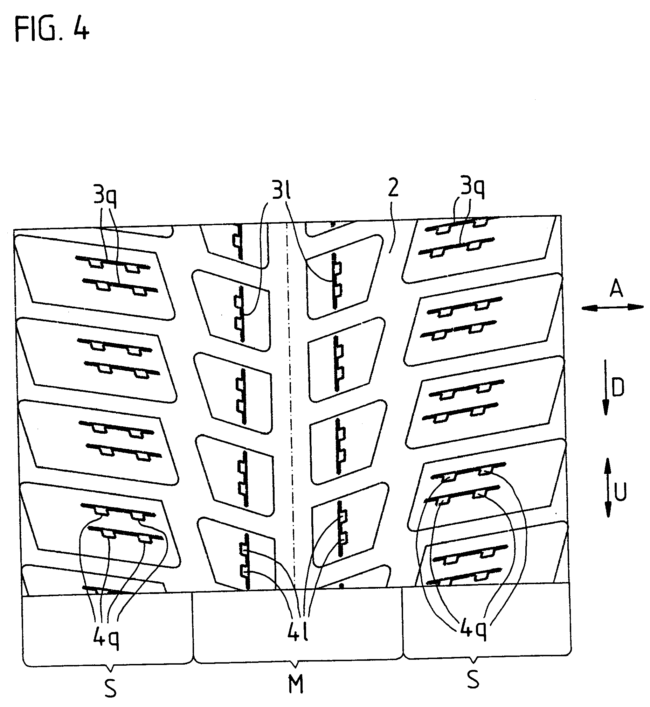

Fig. 4 zeigt in Draufsicht einen Profilauschnitt einer Lauffläche 2 eines Fahrzeugreifens 1 mit Bindung an den Drehsinn D. Im Mittenbereich M ist in jedem Profilklotz jeweils ein Längseinschnitt 3l mit je zwei nach axial außen orientierten Erweiterungen 4l angeordnet. Die Profilklötze beider Schulterbereiche S sind jeweils mit zwei Quereinschnitten 3q versehen, welche jeweils zwei im Drehsinn D gegenüber den Quereinschnitten 3q voreilende Erweiterungen 4q aufweisen.

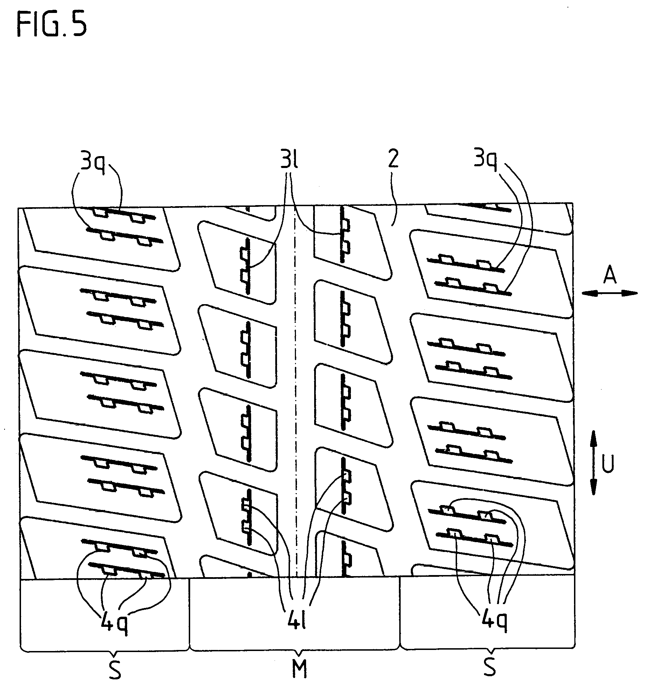

Fig. 5 zeigt in Draufsicht einen Auschnitt einer Lauffläche 2 eines Fahrzeugreifens 1 ohne Drehsinnbindung. Im Mittenbereich M ist in jedem Profilklotz jeweils ein Längseinschnitt 3l mit jeweils zwei nach axial außen orientierten Erweiterungen 4l angeordnet. Die Profilklötze beider Schulterbereiche S sind mit je zwei im wesentlichen parallelen Quereinschnitten 3q versehen, wobei die Erweiterungen 4q der einen Schulter den Quereinschnitten 3q voreilen und die Erweiterungen 4q der anderen Schulter den Quereinschnitten 3q nacheilen.

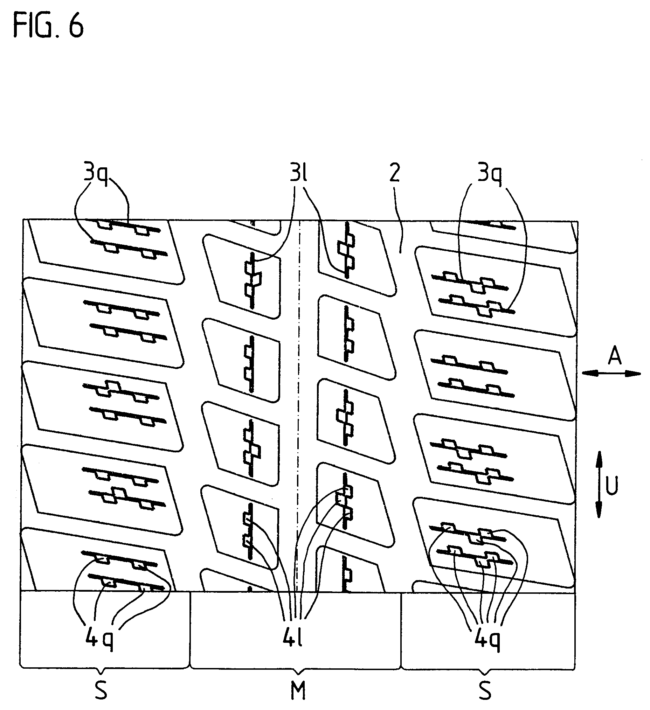

Fig. 6 zeigt in Draufsicht einen Profilauschnitt einer Lauffläche 2 eines Fahrzeugreifens 1 ohne Drehsinnbindung. Im Mittenbereich M ist in jedem Profilklotz jeweils ein Längseinschnitt 3l angeordnet. Jeder Längseinschnitt 3l weist zwei nach axial außen hin orientierte Erweiterungen 4l auf, zusätzlich sind in einigen Längseinschnitten 3l einzelne Erweiterungen 4l genau entgegengesetz orientiert. Die Profilklötze der beiden Schulterbereiche S sind jeweils mit zwei im wesentlichen parallel verlaufenden Quereinschnitten 3q versehen, wobei die Erweiterungen 4q der einen Seite den Quereinschnitten 3q voreilen und die Erweiterungen 4q der anderen Seite den Quereinschnitten 3q nacheilen, je nachdem in welchem Drehsinn der Reifen läuft. Zusätzlich sind in einigen Quereinschnitte 3q einzelne Erweiterungen 4q mit genau entgegengesetzter Orientierung eingefügt.

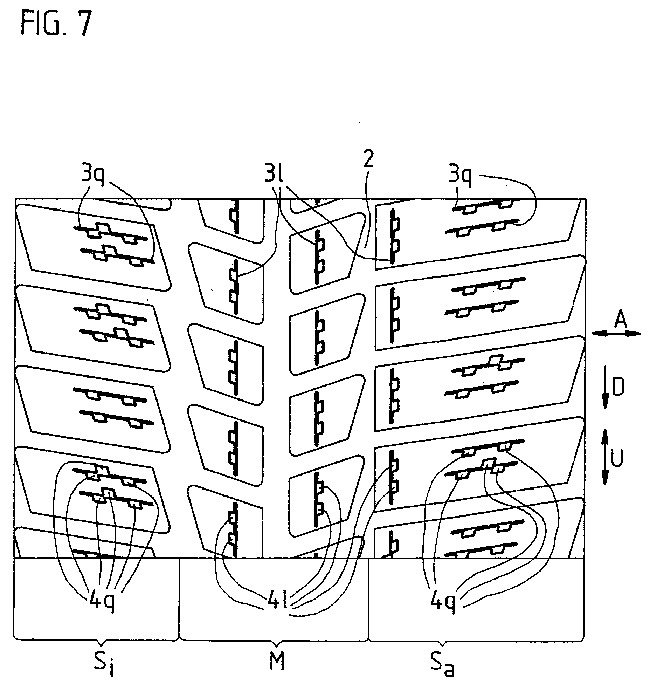

Fig. 7 zeigt in Draufsicht einen Profilauschnitt einer Lauffläche 2 eines Fahrzeugreifens 1 mit Bindung an den Drehsinn D und mit Seitenbindung. Im Mittenbereich M ist in jedem Profilklotz jeweils ein Längseinschnitt 3l angeordnet. Jeder Längseinschnitt 3l weist zwei nach axial außen hin orientierte Erweiterungen 4l auf. Die Profilklötze des fahrzeuginneren Schulterbereiches Sᵢ sind mit je zwei im wesentlichen parallel verlaufenden Quereinschnitten 3q versehen, wobei in Drehrichtung betrachtet die Erweiterungen 4q den Quereinschnitten 3q voreilen, zusätzlich sind in einigen Quereinschnitten 3q einzelne Erweiterungen 4q eingefügt, welche den Quereinschnitten 3q nacheilen. In den Profilklötzen des äußeren Schulterbereiches Sₐ sind jeweils ein Längseinschnitt 3l und zwei im wesentlichen parallel verlaufende Quereinschnitte 3q angeordnet, wobei jeder Längseinschnitt 3l mit zwei Erweiterungen 4l versehen ist, welche nach axial außen hin orientiert sind und jeder Quereinschnitt 3q mit mindestens zwei Erweiterungen 4q versehen ist, welche den Quereinschnitten 3q in Drehrichtung D gesehen voreilen. Zusätzlich sind in einigen Quereinschnitte 3q der äußeren Schulter Sₐ einzelne Erweiterungen 4q angeordnet, welche den Quereinschnitten 3q nacheilen.

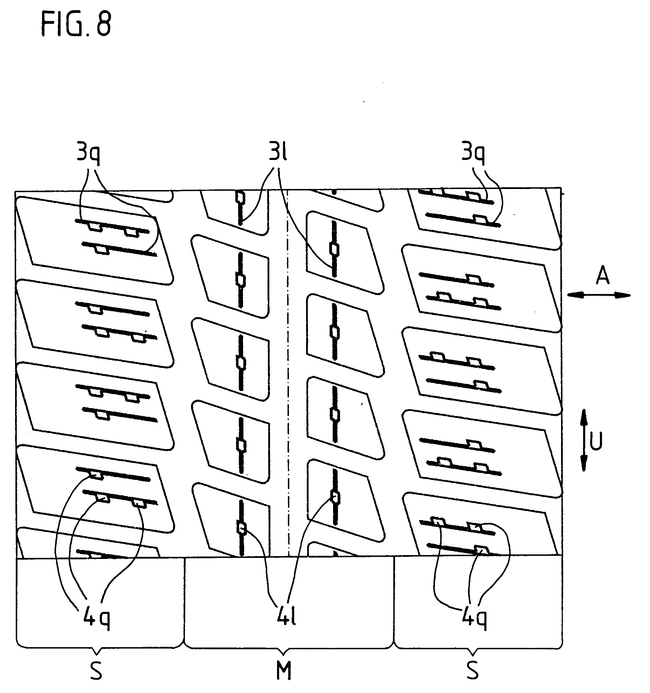

Fig. 8 zeigt in Draufsicht einen Profilauschnitt einer Lauffläche 2 eines symmetrischen Reifenprofils eines Fahrzeugreifens 1 ohne Drehsinn- und Seitenbindung. Im Mittenbereich M ist in jedem Profilklotz je ein Längseinschnitt 3l angeordnet. Jeder Längseinschnitt 3l weist eine zur Einschnittmitte hin zentrierte, nach beiden Seiten sich erstreckende Erweiterung 4l auf. Die Profilklötze der beiden Schulterbereiche S haben je zwei im wesentlichen parallel verlaufende Quereinschnitte 3q, wobei - von Profilkoltz zu Profilklotz alternierend - mal der vordere Quereinschnitt 3q zwei Erweiterungen 4q und der hintere Quereinschnitt 3q eine einzige Erweiterung 4q aufweist, mal umgekehrt. Die Erweiterungen 4q der einen Schulter eilen den Quereinschnitten 3q vor und die Erweiterungen 4q der anderen Schulter eilen den Quereinschnitten 3q nach.

## Patentansprüche

1. Fahrzeugreifen (1) mit einer Lauffläche (2) mit Einschnitten (3), von denen zumindest einige (3) zumindest eine Erweiterung (4) aufweisen,
**dadurch gekennzeichnet,** dass diese Erweiterung(en) (4) sich nach radial innen hin verjüngen.

2. Fahrzeugreifen (1) nach Anspruch 1 dadurch gekennzeichnet, dass die Erweiterungen (4) an der Laufflächenperipherie (P) die Einschnittbreite (Eep) auf das 2- bis 8-fache der Einschnittbreite (Ea) außerhalb der Erweiterungen (4) vergrößert.

3. Fahrzeugreifen (1) nach einem der vorangehenden Ansprüche dadurch gekennzeichnet, dass die Einschnitte (3) in an sich bekannter Weise eine Breite zwischen 0,4 mm und 1,2 mm aufweisen, vorzugsweise zwischen 0,8 mm und 1,0 mm.

4. Fahrzeugreifen (1) nach einem der vorangehenden Ansprüche dadurch gekennzeichnet, dass sich die Erweiterungen (4) linear nach radial innen hin verjüngen.

5. Fahrzeugreifen (1) nach einem der vorangehenden Ansprüche dadurch gekennzeichnet, dass die Erweiterungen (4) auf der Höhe des Grundes (G) des erweiterten Einschnittes (3) ein Breite (Eeg) aufweisen, welche höchstens das 1,5-fache der Einschnittbreite (Ea) außerhalb der Erweiterungen (4) beträgt.

6. Fahrzeugreifen (1) nach einem der vorangehenden Ansprüche dadurch gekennzeichnet, dass Erweiterungen (4q) in QuerEinschnitten (3q) angeordnet sind, also in Einschnitten (3), die in der Draufsicht um höchstens 45° gegenüber der Axialen (A) geneigt sind.

7. Fahrzeugreifen (1) nach Anspruch 6, der drehsinngebunden ausgebildet ist, dadurch gekennzeichnet, dass die Erweiterungen (4q) in Quer-Einschnitten (3q) voreilen.

8. Fahrzeugreifen (1) nach einem der vorangehenden Ansprüche dadurch gekennzeichnet, dass Erweiterungen (4l) in Längs-Einschnitten (3l) angeordnet sind, also in Einschnitten (3), die in der Draufsicht um höchstens 45° gegenüber der Umfangsrichtung (U) geneigt sind, wobei diese Längs-Einschnitte (4l) in an sich bekannter Weise bevorzugt in den jeweils äußeren Vierteln der Laufflächenbreite angeordnet sind.

9. Fahrzeugreifen nach Anspruch 8 dadurch gekennzeichnet, dass sich die Erweiterungen (4l) von dem jeweils erweiterten Einschnitt (3l) aus gesehen nach axial außen hin erweitern.

10. Fahrzeugreifen (1) nach einem der vorangehenden Ansprüche, dadurch gekennzeichnet, dass zu beiden Seiten einer jeden Erweiterung (4) - also bei einem Quereinschnitt (3q) nach links und rechts, bei einem Längseinschnitt (3l) nach vorne und hinten - ein schmaler Einschnitt-Abschnitt anschließt.

11. Fahrzeugreifen (1) nach einem der vorangehenden Ansprüche, dadurch gekennzeichnet, dass er (1) für den winterlichen Einsatz bestimmt ist, insbesondere zur Verwendung auf Schnee.
